# EUROPEAN PATENT APPLICATION

(11) **EP 2 608 059 A1**
(43) Date of publication of application: **26.06.2013**
(21) Application number: 11306747.4
(22) Date of filing: 22.12.2011
(51) Int. Cl.: G06F 17/30, G06K 9/00

(54) **Method and apparatus for prioritizing metadata**

(71) Applicant: Thomson Licensing, 92130 Issy-les-Moulineaux (FR)
(72) Inventor: Li, Hui, 30539 Hannover (DE); Glaeser, Frank, 30449 Hannover (DE); Gaedke, Klaus, 30659 Hannover (DE); Weber, Michael, 30559 Hannover (DE)
(74) Representative: Schmidt-Uhlig, Thomas

(57) **Abstract**

A method and an apparatus for prioritizing metadata associated to a video data item based on an analysis of priority variables are proposed. A first set of metadata items of a first type and a second set of metadata items of a second type different from the first type are retrieved (10). One or more of a plurality of predetermined priority variables for the first set of metadata items are then calculated (11) from metadata items of the first set of metadata items and metadata items of the second set of metadata items. These one or more priority variables; are then analyzed (12) and the priority values of the metadata items of the first set of metadata items are determined (13) based on results of the analysis (12) of the one or more priority variables.

## Description

The invention relates to a method and an apparatus for prioritizing metadata, and more specifically to a method and an apparatus for prioritizing metadata associated to video data based on an analysis of priority variables.

Today huge amounts of data are available in libraries, archives and databases. Digitalization and metadata, i.e. data about data, have simplified the use of these data. During digitization or content analysis different metadata extracting methods are used to extract and save these metadata to an internal metadata repository. With the help of metadata, the underlying data can be accessed efficiently. However, with the increasing number of available methods for extracting metadata, the amount of metadata in the repositories increases accordingly. This enormous increase of metadata amount somewhat decreases the efficiency for data access. In order to enable an efficient data access, it would be desirable to have a solution for prioritizing the existing metadata.

In this regard, US 7,916,894 discloses a method for generating a summary of a video using faces. A plurality of sets of face images associated with a video is obtained, where each set of face images corresponds to a particular person depicted in the video. Of the persons associated with the plurality of sets of face images, one or more of those persons are selected to be included in a facial summary by analyzing the plurality of sets of face images and/or the video. The determination which faces to include in the summary is based on the number of times that a face appears in the video, a face size, or an importance of a face. Though this approach allows to assign a certain priority to the detected faces, it only constitutes an inchoate solution for prioritizing metadata.

It is thus an object of the present invention to propose an improved solution for prioritizing metadata.

According to the invention, a method for determining priority values of metadata items of a first set of metadata items associated to a video data item, the first set of metadata items being of a first type, comprises the steps of:
- retrieving the first set of metadata items;
- retrieving a second set of metadata items associated to the video data item, the second set of metadata items being of a second type different from the first type;
- calculating one or more of a plurality of predetermined priority variables for the first set of metadata items, wherein the one or more priority variables are calculated from metadata items of the first set of metadata items and metadata items of the second set of metadata items;
- performing an analysis of the one or more priority variables; and
- determining the priority values of the metadata items of the first set of metadata items based on results of the analysis of the one or more priority variables.

The invention provides a method for prioritizing metadata, e.g. metadata retrieved from a metadata repository. In order to prioritize the metadata priority variables are used. These priority variables are calculated from the different types of metadata and/or from relationships between the types of metadata. Once the priority variables have been determined, they are analyzed to automatically classify the metadata items into different categories, e.g. important and non-important. The proposed method allows to increase the data access efficiency for video essence. Based on the metadata prioritization, a high performance application system for video essence access and query can easily be realized.

Advantageously, both the first type of metadata and the second type of metadata are one of temporal segmentation metadata, spatial segmentation metadata, quality metadata, impairment metadata, and semantic metadata. While temporal segmentation metadata preferably designates at least one of scenes, shots, and sub-shots of the video data item, spatial segmentation metadata is related to at least one of faces, face groups, and objects of the video data item. Finally, semantic metadata designates at least one of annotations and genre of the video data item. Especially the relationships between the spatial segmentation metadata or annotations and the temporal segmentation metadata allow to derive qualitative conclusions on the importance of the spatial segmentation metadata or the annotations.

Favorably, the analysis of the one or more priority variables is performed by a cluster analysis, e.g. a k-means cluster analysis. Cluster analysis has the advantage that is allows to perform a quick review of data. Furthermore, it is very helpful when unusual similarity measures are needed.

Advantageously, an apparatus for determining priority values of metadata items of a first set of metadata items associated to a video data item is adapted to perform a method as described above for determining the priority values.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates a method according to the general idea of the invention,
- Fig. 2: schematically illustrates an apparatus adapted to perform the method of Fig. 1,
- Fig. 3: shows an example of some metadata extracted from a plurality of frames of video data
- Fig. 4: depicts a table with segmentation metadata retrieved from a news program, and
- Fig. 5: shows face group metadata obtained from the news program.

In the following the invention shall be explained for metadata extracted from video data. Of course, the invention is not limited to this type of data.

During an automatic metadata extraction from video data, a plurality of types of metadata are generated. A first type of metadata is temporal segmentation metadata, which is based on the detection of scenes, shots, sub-shots, and the like. A second type of metadata is spatial segmentation metadata, which is obtained, for example, by face detection or face group segmentation, or more generally by object detection. Another type of metadata is quality metadata, such as contrast, brightness, sharpness, information about blocking artifacts and compression artifacts, overall-quality, or noise. Impairment metadata gives information about dropouts, dirt, and scratches, etc. Finally, semantic metadata includes, inter alia, text-annotations, subtitles and the genre of the video data. Currently, these metadata are handled without discrimination for metadata browsing and metadata queries. However, for developing high performance metadata applications, it would be desirable to prioritize these metadata.

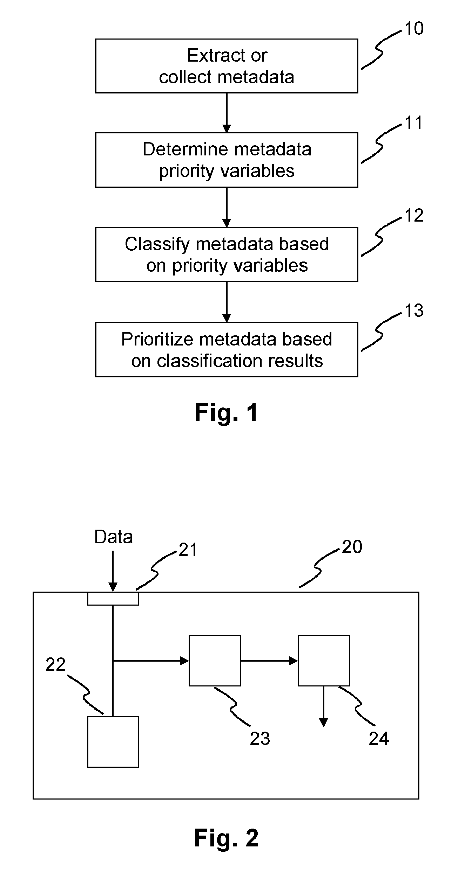

Fig. 1 illustrates a method according to the general idea of the invention. In a first step 10 metadata are extracted or collected. In the next step 11 metadata priority variables are determined. The metadata priority variables are determined from feature parameters within the metadata types as well as from relationships among the different metadata types. Based on these metadata priority variables the extracted or collected metadata are then classified 12 into different clusters with the help of cluster analysis. Finally, the metadata are prioritized 13 based on the cluster analysis results.

Fig. 2 schematically illustrates an apparatus 20 adapted to perform the method of Fig. 1. The apparatus has an input 21 for receiving data. Alternatively or in addition, data may be provided from a storage device 22, e.g. a harddisk or a device for playback of removable storage media. A metadata collector or extractor 23 retrieves metadata from the data. The metadata are either already provided together with the data, or they are determined by analyzing the data. The retrieved metadata are provided to an analyzing unit 24, which performs a cluster analysis based on metadata priority variables and prioritizes the metadata based on the cluster analysis results. The prioritization results are then output for further processing or stored locally. Of course, the metadata collector or extractor 23 and the analyzing unit 24 may likewise be combined into a single processing unit.

A large number of feature parameters are available for determining 11 the priority variables. For example, a physical prioritization may be determined from video essence. This physical prioritization preferably makes use of temporal priority variables, spatial priority variables, and spatial-temporal priority variables. An example of a temporal priority variable is the ratio of the duration of a certain feature relative to the duration of the movie. An example of a spatial priority variable is the size of a certain object relative to the size of the image where the object occurs. Finally, an example of a spatial-temporal priority variable is the change of the size of an object within a scene, e.g. due to zooming-in or -out.

Advantageously, different priority variables are defined for preferred metadata, i.e. different priority variables are determined for face metadata, for scene or shot metadata, for annotation metadata, etc.

As indicated above, the extracted or collected metadata are classified 12 into different clusters with the help of cluster analysis. Cluster analysis refers to a class of techniques used to classify cases into groups that are relatively homogeneous within themselves and heterogeneous between each other, on the basis of a defined set of variables. These groups are called clusters. A cluster analysis consists of several steps. First a distance measure and a clustering algorithm are selected. Then the number of clusters is determined. Finally, the analysis is validated.

Clustering procedures are classified into two different categories, namely hierarchical procedures and non hierarchical procedures. Hierarchical procedures include agglomerative procedures, which start with n clusters to get to 1 cluster, and divisive procedures, which start with 1 cluster to get to n clusters. An example of a non-hierarchical procedure is k-means clustering, which starts with a given number of clusters.

Hierarchical clustering has the advantage that no decision about the number of clusters is necessary. However, these procedures are prone to problems when the data contain a high level of error. Also, they are sometimes very slow and much more influenced by the initial decision.

Non-hierarchical clustering has the advantage of being faster and more reliable. However, the number of clusters and the initial seeds have to be specified.

For k-means clustering the number k of cluster is fixed. An initial set of k 'seeds' or aggregation centers is provided. Given a certain threshold, all units are assigned to the nearest cluster seed. Then new seeds are computed and the step of assigning the units to the nearest clusters is performed once more. This is repeated until no reclassification of the units is necessary.

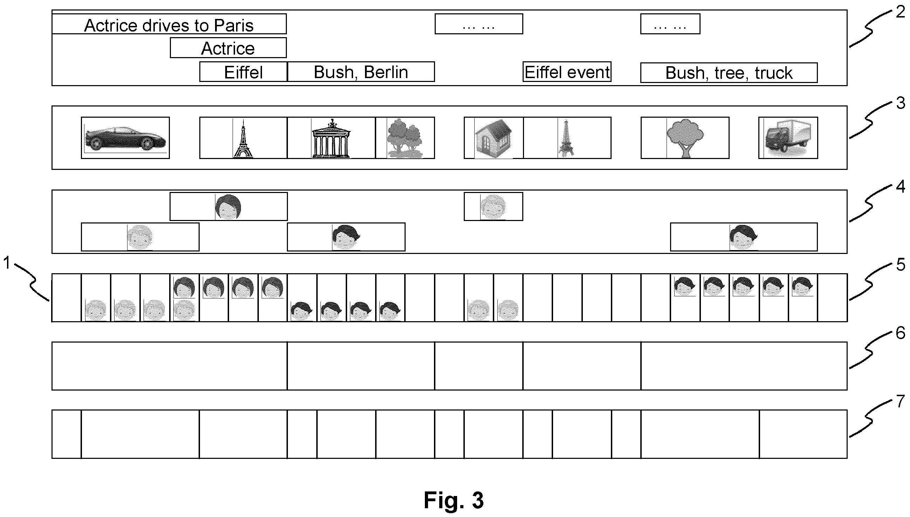

Fig. 3 shows an example of some metadata extracted from a plurality of frames 1 of video data. The extracted metadata include annotations 2, object groups 3, and face groups 4, which are grouping results derived from face detection metadata 5. Apart from these rather content related metadata, further metadata relate to scenes 6 as well as shot and sub-shot metadata 7.

In the following the face group metadata shall be considered as an example for the proposed metadata prioritization solution. Of course, the invention can likewise be realized with other metadata types, e.g. other detected objects. Basic parameters for face group metadata are their 'start-time' and 'duration' values. A face group with a longer duration should in general be more meaningful than a face group with a shorter duration. Therefore, the variable 'duration' is an important parameter for estimating the metadata priority of a face group.

Scene segmentation metadata, shot segmentation metadata, and sub-shot segmentation metadata reflect background, object and event changes within the video essence, respectively. Face detection within the video frames is relevant for object changes. Therefore, the face group metadata are also relevant for these scene, shot, and sub-shot segmentation metadata. If a face object appears longer during any scene, shot, or sub-shot of the video essence, it can be assumed that the corresponding face object should be a meaningful object. Therefore, the following temporal priority variables are preferably used for estimating the face group metadata priority:
- Ratio of face duration with regard to movie duration (RD_face_movie; value: 0∼1)
- Ratio of face duration with regard to scene duration (RD_face_scene; value: 0∼1)
- Ratio of face duration with regard to shot duration (RD_face_shot; value: 0∼1)
- Number of sub-shots during face duration (N_face_subshot; value: 1, 2, 3...) .

Although the scene, shot, and sub-shot segmentation metadata are obtained with a different metadata extracting algorithm than the face group metadata, they are physically or logically relevant to their associated metadata parts. Making full use of the relevant parameters among these metadata types allows to prioritize the associated metadata.

In addition to the above temporal priority variables, at least the following spatial priority variables are available:
- Ratio of face size with regard to frame size (value: 0∼1)
- Face property (value: frontal=1, profile-right=0.5, half-right=0.2...)
- Face position (value: center=1, left/right=0.5...).

Also, at least the following spatial-temporal variables can be used:
- Change of face size (moving-vector: zoom-in or -out)
- Change of face property
- Change of face position (moving-vector: pan(left-right), tilt (up-down)) .

Also semantic metadata can be used for prioritizing face group metadata. For example, the ratio between the numbers of subtitle metadata within a face group and the number of subtitle metadata within the corresponding scene (or shot) is suitable as a priority variable for calculating the face group priority. Within a scene or shot, a face group with a larger amount of subtitle metadata should be more important than a face group with a smaller amount of subtitle metadata.

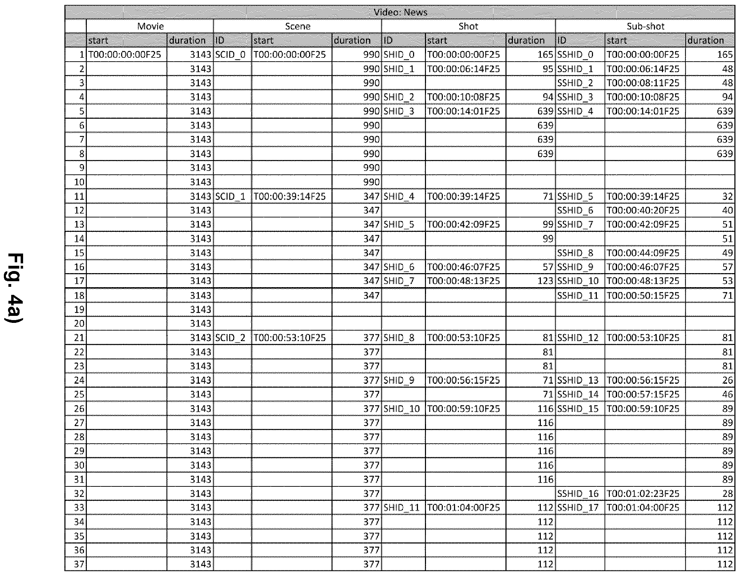

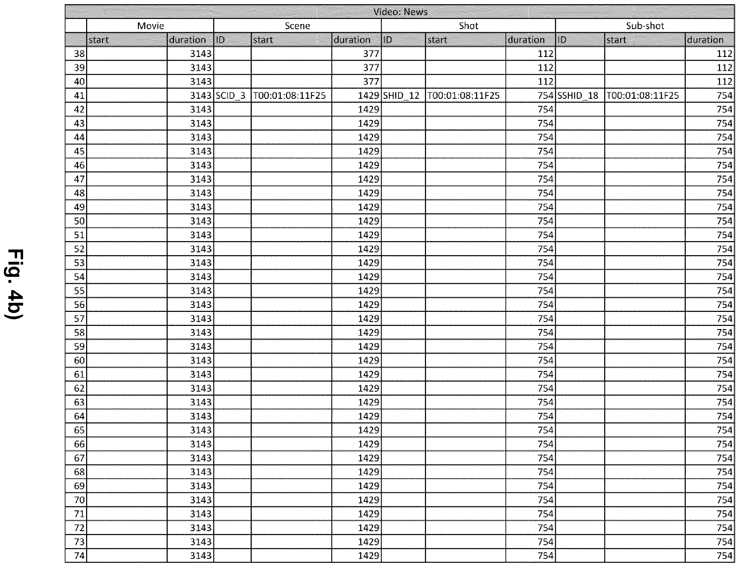

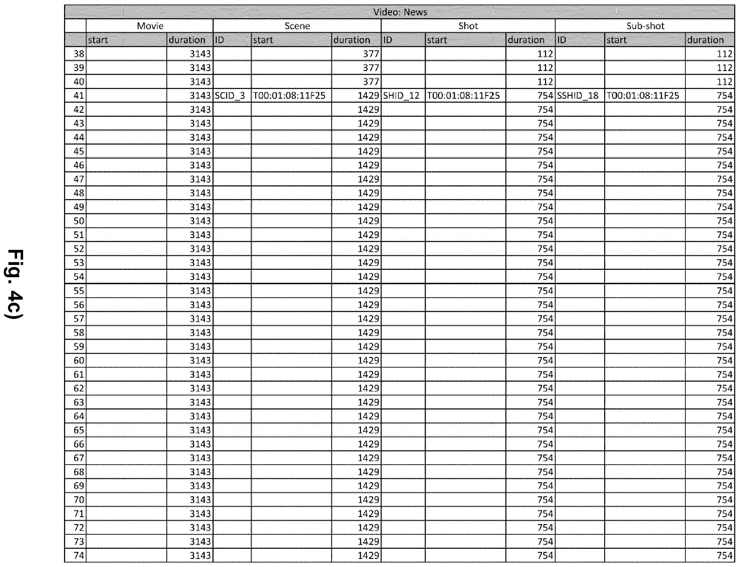

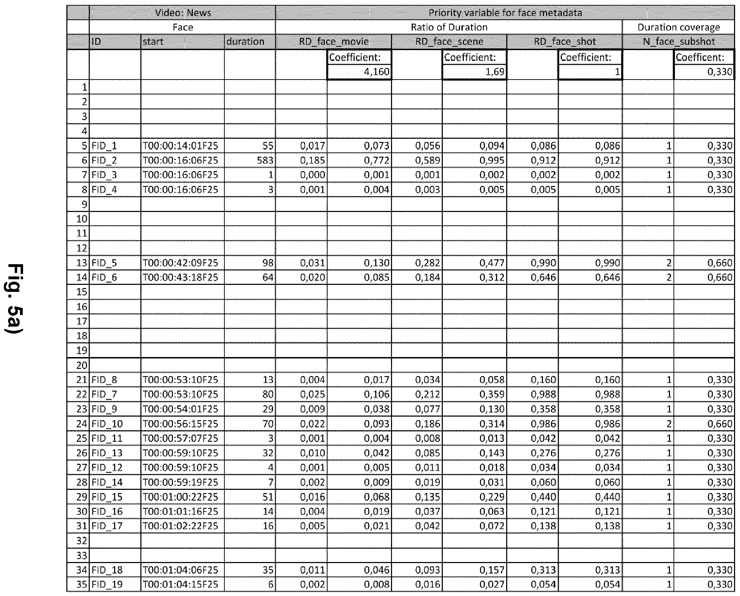

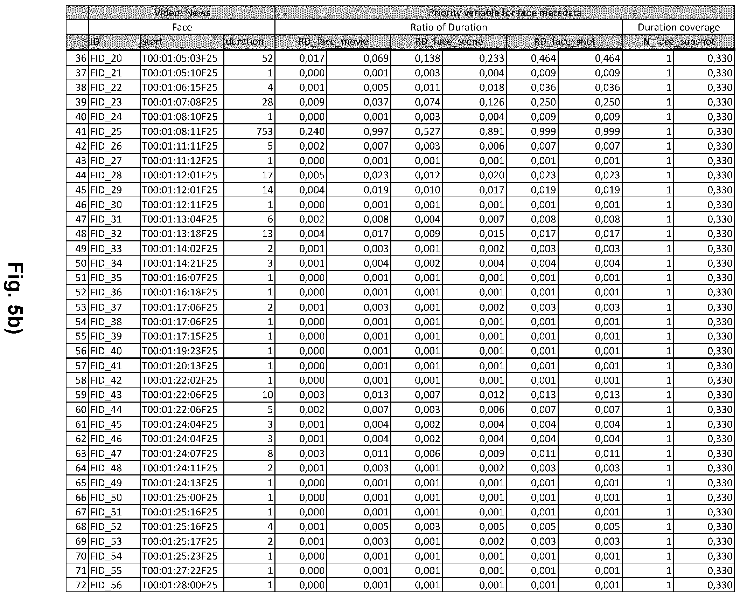

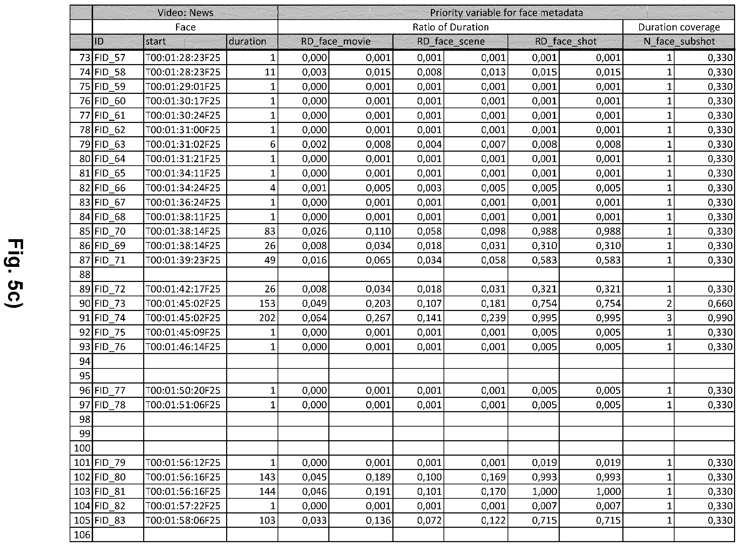

The table illustrated in Figs. 4a) to c) shows segmentation metadata (scene, shot, and sub-shot segmentation metadata) retrieved from a news program. For each detected segment, i.e. for each scene, shot, and sub-shot, the start time, the duration (in frames), and an ID (SCID_n, SHID_n, and SSHID_n) are indicated. Figs. 5a) to c) depict face detection metadata obtained from this news program. Again, for each detected face the start time, the duration (in frames), and an ID (FID_n) are indicated. Also included in the table are the relevant resulting temporal priority variables (RD_face_movie, RD_face_scene, RD_face_shot, and N face subshot).

In order to scale the temporal priority variables to values between 0 and 1, scale coefficients are defined for these temporal priority variables.

Based on the scaled temporal priority variables a k-means clustering was performed to classify the detected faces into the categories "high importance", "normal importance", and "low importance". Cluster analysis was done using the initial cluster centers as specified in Table 1. The initial cluster centers are generally automatically determined by the cluster analysis tool.

**Table 1**

| Initial Cluster Centers | | | |
|---|---|---|---|
| | Cluster | | |
| | 1 | 2 | 3 |
| RD_face_movie | , 267 | , 997 | , 001 |
| RD_face_scene | , 239 | , 891 | , 001 |
| RD_face_shot | , 995 | , 999 | , 001 |
| N_face_subshot | , 990 | , 330 | , 330 |

The clustering result of the originally identified 83 cases (Face IDs) is summarized in Table 2. Table 3 and Table 4 show the resulting final cluster centers and the distances between the final cluster centers, respectively.

**Table 2**

| Cluster Membership | | | |
|---|---|---|---|
| Case Number | Face ID | Cluster | Distance |
| 1 | FID_1 | 3 | , 145 |
| 2 | FID_2 | 2 | , 263 |
| 3 | FID_3 | 3 | , 001 |
| 4 | FID_4 | 3 | , 006 |
| 5 | FID_5 | 1 | , 429 |
| 6 | FID_6 | 1 | , 519 |
| 7 | FID_8 | 3 | , 170 |
| 8 | FID_7 | 1 | , 690 |
| 9 | FID_9 | 3 | , 381 |
| 10 | FID 10 | 1 | , 381 |
| 11 | FID 11 | 3 | , 043 |
| 12 | FID 13 | 3 | , 312 |
| 13 | FID 12 | 3 | , 037 |
| 14 | FID 14 | 3 | , 067 |
| 15 | FID 15 | 3 | , 499 |
| 16 | FID 16 | 3 | , 136 |
| 17 | FID 17 | 3 | , 156 |
| 18 | FID 18 | 3 | , 352 |
| 19 | FID 19 | 3 | , 059 |
| 20 | FID 20 | 3 | , 522 |
| 21 | FID 21 | 3 | , 009 |
| 22 | FID 22 | 3 | , 039 |
| 23 | FID 23 | 3 | , 281 |
| 24 | FID 24 | 3 | , 009 |
| 25 | FID 25 | 2 | , 000 |
| 26 | FID 26 | 3 | , 010 |
| 27 | FID 27 | 3 | , 000 |
| 28 | FID 28 | 3 | , 036 |
| 29 | FID 29 | 3 | , 030 |
| 30 | FID 30 | 3 | , 000 |
| 31 | FID 31 | 3 | , 012 |
| 32 | FID 32 | 3 | , 027 |
| 33 | FID 33 | 3 | , 003 |
| 34 | FID 34 | 3 | , 005 |
| 35 | FID 35 | 3 | , 000 |
| 36 | FID 36 | 3 | , 000 |
| 37 | FID 37 | 3 | , 003 |
| 38 | FID 38 | 3 | , 000 |
| 39 | FID 39 | 3 | , 000 |
| 40 | FID 40 | 3 | , 000 |
| 41 | FID 41 | 3 | , 000 |
| 42 | FID 42 | 3 | , 000 |
| 43 | FID 43 | 3 | , 020 |
| 44 | FID 44 | 3 | , 010 |
| 45 | FID 45 | 3 | , 005 |
| 46 | FID 46 | 3 | , 005 |
| 47 | FID 47 | 3 | , 016 |
| 48 | FID 48 | 3 | , 003 |
| 49 | FID 49 | 3 | , 000 |
| 50 | FID 50 | 3 | , 000 |
| 51 | FID 51 | 3 | , 000 |
| 52 | FID 52 | 3 | , 007 |
| 53 | FID 53 | 3 | , 003 |
| 54 | FID 54 | 3 | , 000 |
| 55 | FID 55 | 3 | , 000 |
| 56 | FID 56 | 3 | , 000 |
| 57 | FID 57 | 3 | , 000 |
| 58 | FID 58 | 3 | , 023 |
| 59 | FID 59 | 3 | , 000 |
| 60 | FID 60 | 3 | , 000 |
| 61 | FID 61 | 3 | , 000 |
| 62 | FID 62 | 3 | , 000 |
| 63 | FID 63 | 3 | , 012 |
| 64 | FID 64 | 3 | , 000 |
| 65 | FID 65 | 3 | , 000 |
| 66 | FID 66 | 3 | , 007 |
| 67 | FID 67 | 3 | , 000 |
| 68 | FID 68 | 3 | , 000 |
| 69 | FID 70 | 1 | , 693 |
| 70 | FID 69 | 3 | , 312 |
| 71 | FID 71 | 3 | , 588 |
| 72 | FID 72 | 3 | , 323 |
| 73 | FID 73 | 1 | , 418 |
| 74 | FID 74 | 1 | , 000 |
| 75 | FID 75 | 3 | , 004 |
| 76 | FID 76 | 3 | , 004 |
| 77 | FID 77 | 3 | , 004 |
| 78 | FID 78 | 3 | , 004 |
| 79 | FID 79 | 3 | , 018 |
| 80 | FID 80 | 1 | , 668 |
| 81 | FID 81 | 1 | , 668 |
| 82 | FID 82 | 3 | , 006 |
| 83 | FID 83 | 3 | , 737 |

**Table 3**

| Final Cluster Centers | | | |
|---|---|---|---|
| | Cluster | | |
| | 1 | 2 | 3 |
| RD_face_movie | , 153 | , 885 | , 013 |
| RD_face_scene | , 258 | , 943 | , 026 |
| RD_face_shot | , 927 | , 956 | , 070 |
| N_face_subshot | , 550 | , 330 | , 330 |

**Table 4**

| Distances between Final Cluster Centers | | | |
|---|---|---|---|
| Cluster | 1 | 2 | 3 |
| 1 | | 1, 027 | , 925 |
| 2 | 1, 027 | | 1,545 |
| 3 | , 925 | 1,545 | |

The test results, which are summarized in Table 5, show that nine cases are in cluster 1. Two cases are in cluster 2, and 72 cases are in cluster 3. Apparently, all cases could be validly assigned to one of the three clusters.

**Table 5**

| Number of Cases in each Cluster | | |
|---|---|---|
| Cluster | 1 | 9, 000 |
| | 2 | 2,000 |
| | 3 | 72,000 |
| Valid | | 83,000 |
| Missing | | , 000 |

The cases belonging to cluster 1 and cluster 2 are important cases, they have a high priority. The cases belonging to cluster 3 are non-important, they have a low priority.

## Claims

1. A method for determining priority values of metadata items of a first set of metadata items associated to a video data item, the first set of metadata items being of a first type, the method **comprising** the steps of:
- retrieving (10) the first set of metadata items;
- retrieving (10) a second set of metadata items associated to the video data item, the second set of metadata items being of a second type different from the first type;
- calculating (11) one or more of a plurality of predetermined priority variables for the first set of metadata items, wherein the one or more priority variables are calculated from metadata items of the first set of metadata items and metadata items of the second set of metadata items;
- performing an analysis (12) of the one or more priority variables; and
- determining (13) the priority values of the metadata items of the first set of metadata items based on results of the analysis (12) of the one or more priority variables.

2. The method according to claim 1, **wherein** the first type of metadata is one of temporal segmentation metadata, spatial segmentation metadata, quality metadata, impairment metadata, and semantic metadata.

3. The method according to claim 1 or 2, **wherein** the second type of metadata is one of temporal segmentation metadata, spatial segmentation metadata, quality metadata, impairment metadata, and semantic metadata.

4. The method according to claim 2 or 3, **wherein** the temporal segmentation metadata designates at least one of scenes, shots, and sub-shots of the video data item.

5. The method according to one of claim 2 to 4, **wherein** the spatial segmentation metadata designates at least one of faces, face groups, and objects of the video data item.

6. The method according to one of claim 2 to 5, **wherein** the semantic metadata designates at least one of annotations and genre of the video data item.

7. The method according to one of claims 1 to 6, **wherein** the analysis (12) of the one or more priority variables is performed by a cluster analysis.

8. The method according to claim 7, **wherein** the cluster analysis is a k-means cluster analysis.

9. The method according to one of claims 1 to 8, **wherein** the one or more priority variables are based on relationships between the types of metadata.

10. An apparatus (20) for determining priority values of metadata items of a first set of metadata items associated to a video data item, **characterized in that** the apparatus (20) is adapted to perform a method according to one of claim 1 to 9 for determining the priority values.
